# EUROPEAN PATENT APPLICATION

(11) **EP 2 333 992 A2**
(43) Date of publication of application: **15.06.2011**
(21) Application number: 10194424.7
(22) Date of filing: 09.12.2010
(51) Int. Cl.: H04H 60/82, H04H 60/43, H04H 60/73, H04H 60/65, H04H 60/27

(54) **Method for providing widget according to broadcast service information and broadcast receiving apparatus using the same**

(30) Priority: 11.12.2009 KR 20090123242
(71) Applicant: SAMSUNG ELECTRONICS CO., LTD., Suwon-si Gyeonggi-do 442-742 (KR)
(72) Inventor: Lee, Tae-dong, Gyeonggi-do (KR); Kim, Ki-ho, Gyeonggi-do (KR)
(74) Representative: Robinson, Ian Michael

(57) **Abstract**

A method for providing widgets according to broadcast service information and a broadcast receiving apparatus using the same, are provided. The widget-providing method receives and outputs a broadcast, which is selected by a user, and displays one of a plurality of widget groups based on the acquired information of the selected broadcast. Accordingly, users can have and use widget groups related to information on the user-selected broadcast.

## Description

### CROSS-REFERENCE TO RELATED APPLICATION

This application claims priority from Korean Patent Application No. 2009-123242, filed on December 11, 2009, in the Korean Intellectual Property Office, the disclosure of which is incorporated herein by reference in its entirety.

### BACKGROUND

### 1. Field

Apparatuses and methods consistent with the exemplary embodiments relate to broadcast receiving apparatus, and more particularly, to a broadcast receiving apparatus which performs additional functions other than a broadcast receiving function.

### 2. Description of the Related Art

A television (TV), the most exemplary broadcasting receiving apparatus, has additional functions other than its original function of receiving broadcasts, and the additional functions have become more diverse and complex.

The advent of Internet TV makes it possible to provide a lot of useful information to users other than broadcasting content on TV. Abundant information of diverse types can be available on the Internet.

Accordingly, it is necessary to find ways to provide selective and useful information for users among the diverse and abundant information.

### SUMMARY OF THE EXEMPLARY EMBODIMENTS

According to the present invention there is provided an apparatus and method as set forth in the appended claims. Other features of the invention will be apparent from the dependent claims, and the description which follows.

Exemplary embodiments address at least the above problems and/or disadvantages and other disadvantages not described above. Also, the exemplary embodiments are not required to overcome the disadvantages described above, and an exemplary embodiment may not overcome any of the problems described above.

The exemplary embodiments provide a method for providing a widget and a broadcast receiving apparatus using the same, which displays one of a plurality of widget groups based on broadcast information regarding a broadcast chosen by a user to provide more useful and necessary information to users.

According to an aspect of an exemplary embodiment, a widget-providing method includes: receiving and outputting a broadcast selected by a user; acquiring broadcast information of the broadcast selected by the user; and displaying one of a plurality of widget groups based on the acquired information.

The broadcast information may be information about a broadcast station which provides the broadcast selected by the user.

The widget group displayed in the displaying operation may be a congregation of widgets where information provided by the broadcast station is recorded.

The broadcast information may be acquired from broadcast signals, and the information recorded on the widgets may be provided from the broadcast station through a network.

The plurality of widget groups may be matched to a plurality of broadcast stations, respectively.

At least one of widgets in a first widget group among the plurality of widget groups may be different from widgets in a second widget group among the plurality of widget groups.

Arrangement of widgets in the first widget-group among the plurality of widget groups may be different from arrangement of widgets in the second widget-group among the plurality widget groups.

A widget-providing method may further include: operating a selected widget, if one of widgets of the widget group displayed in the displaying operation is selected.

The widget-providing method may further include: disappearing (or not displaying) the widget group if the selected-widget is operated; and displaying the widget group again if the selected widget is completed.

The broadcast information acquiring operation may further include; acquiring broadcast information about a changed broadcast, if the selected-broadcast is changed.

The widget group may include at least one widget.

The widget-providing method may further include automatically operating at least one widget of the widget group displayed in the displaying operation.

The broadcast information may include either information of a program, which is chosen by a user, or information of a channel of the program, which is chosen by a user.

The widget-providing method may further include updating the widget group and at least one of widgets of the widget groups.

The widget-providing method may further include adding the widget group.

According to an aspect of another exemplary embodiment, a broadcast-receiving apparatus includes: a broadcast-receiving unit which receives a user-chosen broadcast; an output unit which outputs the broadcast received at the broadcast receiving unit; and a control unit which acquires broadcast information of the broadcast which is chosen by the user and displays one of a plurality of widget groups on the output unit with the broadcast based on the broadcast information.

The broadcast information may be information about a broadcast station, which provides the broadcast selected by the user.

The widget group displayed on the output unit may be a congregation of widgets where information provided by the broadcast station is recorded.

The broadcast information may be acquired from broadcast signals, and the information recorded in the widgets may be provided by the broadcast station through a network.

The plurality of widget groups may be matched to a plurality of broadcast stations, respectively.

At least one of widgets in a first widget-group among the plurality of widget groups may be different from widgets in a second widget-group among the plurality of widget groups.

The arrangement of widgets in the first widget-group among the plurality of widget groups may be different from the arrangement of widgets in the second widget-group among the plurality of widget groups.

If one of the widgets of the displayed widget group is selected, the control unit may operate the selected widget.

If a selected widget is operated, the control unit may control the widget group to be displayed again.

If a selected widget is operated, the control unit may control the widget group to disappear (or not be displayed), and if the operated widget is completed, the control unit may control the widget group to be displayed again.

The widget group may include at least one widget.

### BRIEF DESCRIPTION OF THE DRAWINGS

The above and/or other aspects of the exemplary embodiments will be more apparent by describing certain exemplary embodiments with reference to the accompanying drawings, in which:

FIG. 1 is a block diagram illustrating a digital television according to an exemplary embodiment;

FIG. 2 is a view to explain information and programs stored in a storage unit shown in FIG. 1;

FIG. 3 is a flowchart illustrating a method for providing a widget according to an exemplary embodiment;

FIGS. 4A and 4B are views showing results shown at the bottom of a TV display if a home widget is operated;

FIG. 5 is a view showing results if a widget is selected in a home widget and the selected widget is operated; and

FIG 6 is a view showing results at the bottom of TV display showing if home widgets are operated in a home widget.

### DETAILED DESCRIPTION OF EXEMPLARY EMBODIMENTS

Certain exemplary embodiments will now be described in greater detail with reference to the accompanying drawings.

In the following description, the same drawing reference numerals are used for the same elements even in different drawings. The matters defined in the description, such as detailed construction and elements, are provided to assist in a comprehensive understanding of the exemplary embodiments. Thus, it is apparent that the exemplary embodiments can be carried out without those specifically defined matters. Also, well-known functions or constructions are not described in detail since they would obscure the exemplary embodiments with unnecessary detail.

### 1. DTV, to which the present exemplary embodiments are applicable

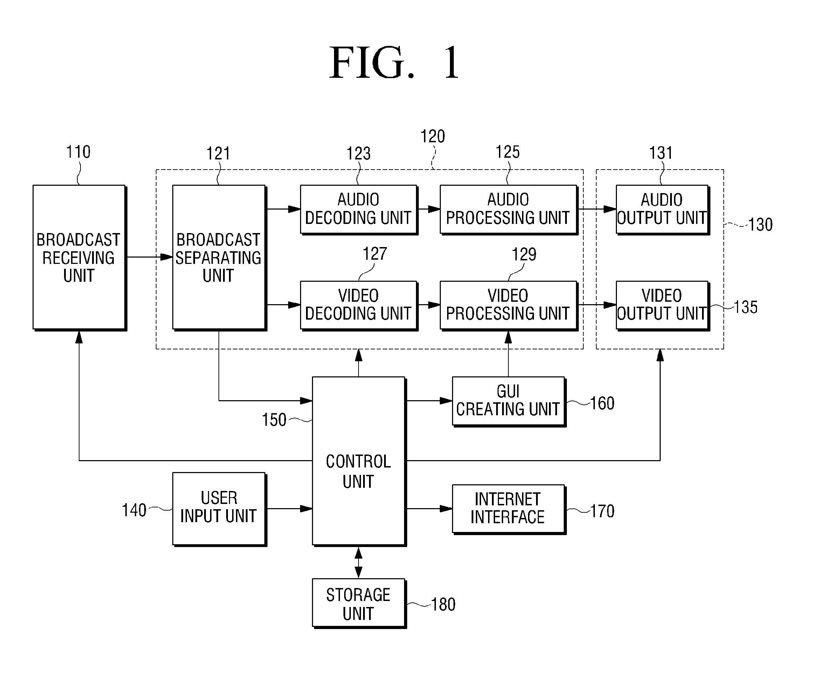

FIG. 1 is a block diagram illustrating a digital television (DTV) according to an exemplary embodiment. As shown in FIG. 1, the DTV includes a broadcast-receiving unit 110, a broadcast processing unit 120, a broadcast output unit 130, a user-input unit 140, a control unit 150, a Graphical User Interface (GUI) creating unit 160, an Internet-interface 170 and a storage unit 180.

The broadcast-receiving unit 110 tunes to and demodulates one broadcast in a wired or wireless way through air or cable.

The broadcast processing unit 120 performs signal process on broadcast signals output from the broadcast-receiving unit 110. The processing unit 120 includes a broadcast-separating unit 121, an audio-decoding unit 123, an audio-processing unit 125, a video-decoding unit 127 and a video-processing unit 129.

The broadcast separating unit 121 separates audio and video signals and broadcast information from broadcast signals from the broadcast-receiving unit 110 and outputs them. The separated audio and video signals are input into the audio-decoding unit 123 and the video-decoding unit 127, respectively, and used to provide digital broadcast programs. The broadcast information separated from the broadcast signals is input into the control unit 150. The broadcast information refers to Program and System Information Protocol (PSIP) information, Service Indicators (SI) tables and other information related to the broadcast.

The audio-decoding unit 123 decodes audio signals output from the broadcast-separating unit 121. Accordingly, the audio-decoding unit 123 outputs decompressed audio signals.

The audio-processing unit 125 converts decoded audio signals output from the audio-decoding unit 123 into audio signals of a specific format, which can be output through a speaker of the DTV.

The video-decoding unit 127 decodes video signals output from the broadcast-separating unit 121. Accordingly, the video decoding unit 127 outputs decompressed video signals.

The video-processing unit 129 converts decoded video signals output from the video decoding unit 127 into video signals of a format which can be output through a display of the DTV. To accomplish this, the video-processing unit 129 performs color signal processing, scaling, and Frame Rate Conversion (FRC) on the decoded video signals.

The GUI-creating unit 160 produces a GUI to be displayed on a display under the control of the control unit 150. Particularly, the GUI created by the GUI -creating unit 160 includes a home widget and a widget, where the widget is a part of the home widget. The GUI-creating unit 160 is controlled by the control unit 150 to create a GUI.

The GUI created by the GUI-creating unit 160 is applied to the video processing unit 129 and added to a video to be displayed on the display.

The output unit 130 outputs a video and an audio corresponding to the video and audio signals output from the broadcast processing unit 120 and provides them for users. The output unit 130 with this function includes an audio output unit 131 and a video output unit 135.

The audio output unit 131 outputs audio signals output from the audio processing unit 125 through a speaker. The video output unit 135 outputs the video signals output from the video processing unit 129 through a display.

The internet interface 170 is communicably connected to the Internet, the outside network.

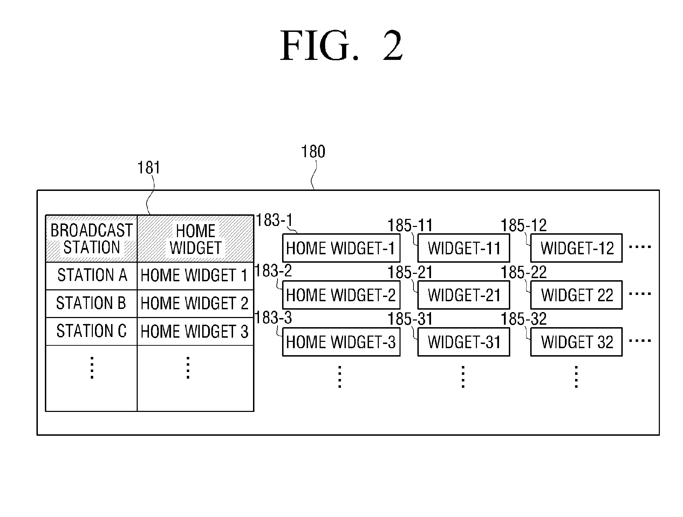

The storage unit 180 is a recording medium where necessary information and programs are stored for the control unit 150 to function for the DTV As shown in FIG. 2, the storage unit 180 stores a home-widget selection table 181, home widgets 183-1, 183-2, 183-3, ... and widgets 185-11, 185-12, ...,185-21, 185-22, ..., 185-31, 185-32, .....

The home-widget selection table 181 is a table where a broadcast station corresponds to a home widget on a one-on-one basis. The table can become a reference for the control unit 150 to decide which home widget to operate.

The home widgets 183-1, 183-2, 183-3... are programs, which are used to display home widgets on a display as a GUI. As will be described below, the home widget consists of several widgets. Accordingly, the home widget can be understood as a widget group, a widget list or a widget frame with several widgets included.

The widgets 185-11, 185-12..., 185-21, 183-22, ..., 185-31, 183-32, ... are included in the home widgets 183-1, 183-2, 183-3, .... In detail, 1) the widget-11 (185-11) and widget-12 (185-21) are included in the home widget-1 (183-1), 2) the widget-21 (185-21) and the widget-22 (185-22) are included in the home widget-2 (183-2), and 3) the widget-31 (185-31) and the widget-32 (185-32) are included in the home widget-3 (183-3).

Referring back to FIG. 1, the rest of components of the DTV will be explained.

The user-input unit 140 transmits a user command input by a function button on a remote controller or a front panel of the DTV to the control unit 150.

The control unit 150 controls the overall operation of the DTV according to the user command received from the user-input unit 140. In detail, the control unit 150 controls the broadcast-receiving unit 110, the broadcast-processing unit 120 and the broadcast-output unit 130 to receive and output a program selected by users.

Moreover, the control unit 150 finds a broadcast station providing current programs, operates the broadcast station's home widget and provides users with widgets. This process will be explained in detail below.

### 2. Widget-providing method using DTV

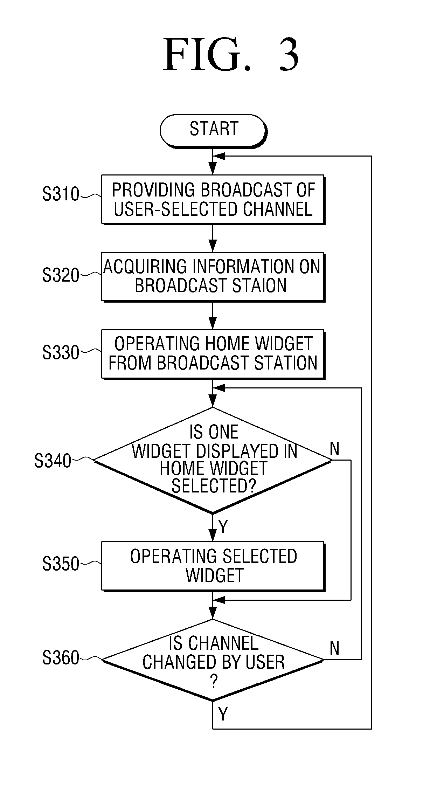

FIG. 3 is a flowchart illustrating a method for providing a widget according to an exemplary embodiment.

As shown in FIG. 3, the control unit 150 controls the broadcast receiving unit 110 to provide a program of a channel chosen through the user-input unit 140 (operation S310). Broadcast signals received from the broadcast receiving unit 110 are processed in the broadcast processing unit 120, and then output through the broadcast output unit 130, thus allowing users to view the program of the user-chosen channel.

The control unit 150 acquires information on a broadcast station from broadcast information separated from the currently received signals (operation S320). In operation S320, the control unit 150 finds which broadcast station is now providing programs which are being viewed by users.

Then, the control unit 150 operates the home widget of the broadcast station identified in operation S320, and controls the GUI-creating unit 160 to make the operation result be shown on the display (operation S330). To process operation S330, the control unit 150 accesses to the home-widget selection table 181 stored in the storage unit 180.

For example, 1) if a broadcast station "A" is identified in operation S320, the control unit 150 operates the home widget-1 (183-1) in operation S330. 2) If a broadcast station "B" is identified in operation S320, the control unit 150 operates the home widget-2 (183-2).

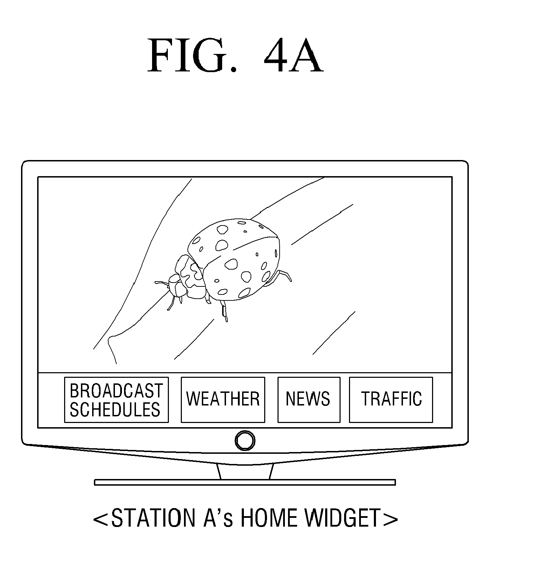

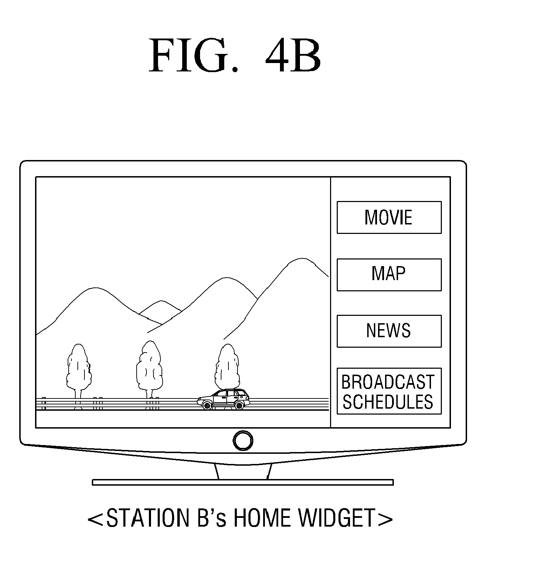

In operation S330, the operated home widget is overlapped with the broadcast provided in operation S310. FIG. 4A shows that the home widget-1 (183-1) is operated and overlapped with broadcast station A's broadcast at the bottom of a DTV FIG. 4B shows that the home widget-2
(183-2) is operated and overlapped with broadcast station B's broadcast on the right side of a DTV.

As shown in FIG. 4A, the home widget-1 (183-1) includes a "broadcast schedule" widget, a "weather" widget, a "news" widget, and a "traffic" widget. As shown in FIG. 4B, the home widget-2 (183-2) includes a "movie" widget, a "map" widget, a "news" widget and a "broadcast schedules" widget.

As shown in FIGS. 4A and 4B, the home widget is a widget group made up of several widgets. Type and arrangement of widgets included in the home widget are different according to each home widget.

Users can choose a widget in the home widget through the user-input unit 140.

If a widget is chosen from the home widget by a user (operation S340-Y), the control unit 150 operates the user- selected widget (operation S350). The widget operated by the control unit 150 in operation S350 acquires information to be included in the widget by accessing a broadcast server through internet interface 170, and controls the GUI-creating unit 160 to display a widget window containing the information on the display

Broadcasting servers provide information to be recorded on the widgets shown in the broadcast stations' home widget on a real time basis, and may be operated and managed by broadcast stations or a commissioned company.

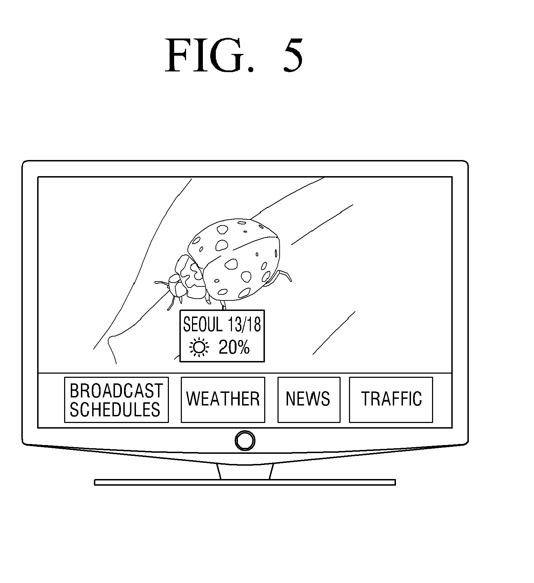

FIG. 5 shows a result where the "weather" widget is operated, after a user chooses the "weather" widget from the home widget at the bottom of a display while watching a station "A"'s broadcast.

In FIG. 5, the widget window containing weather information is shown outside the home widget, but this is merely an example. It is possible for the widget window on containing weather information to be shown inside the home widget.

In the meantime, if a user changes a channel (operation S360), operation S310 is re-operated. Accordingly, a home widget from the previous program's broadcast station will disappear, and a home widget from the current program's station will appear.

### 3. Variations

### (1) Home widget

In the above exemplary embodiment, the home widget and widgets are embodied as a separate program, and this is just an example. The home widget and the widgets included in it can be embodied as one program and be contained in a DTV.

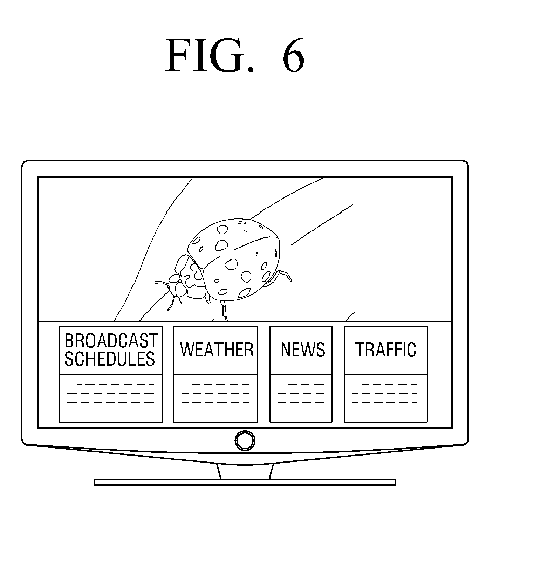

Moreover, the widgets of the home widget are considered as being operated after a user selects a channel. However, the widgets may be automatically operated when the home widget is working. FIG. 6 shows a result where the home widget is displayed at the bottom of the display after the widgets are operated.

In the meantime, if a widget is chosen from the home widget, the home widget may disappear and the chosen widget may remain on display. However, in this case, if a user inputs a command to end the chosen widget, the operated widget should disappear from the display and the home widget should appear again.

The information included in the home widget is considered to be provided from broadcast servers through the internet. However, the information may be provided from servers other than the broadcaster's server or networks other than the Internet.

In the meantime, the number of widgets included in the home widget is not limited. Generally, the home widget includes a plurality of widgets, but the home widget may include a single widget.

### (2) DTV

The DTV mentioned above is an example of a broadcast-receiving apparatus, which receives broadcasts and provides the broadcasts to users. The exemplary embodiments can be applied to digital appliances with broadcast receiving functions and other types of broadcast-receiving apparatuses other than DTV.

### (3) Classification of home widget

In the above exemplary embodiments, the home widget is different according to broadcast stations, but it is just an example for a better explanation. The home widget may be different according to other factors. For example, the home widget can be different according to particular broadcast programs or the selected channels.

The broadcast channels mentioned here are different from broadcast stations. Even if broadcast channels are different, broadcast stations can be the same, as a station can provide broadcast services through many channels.

### (4) Home widget and widget's updates

The home widget and the widgets stored in the storage unit 180 can be updated. The update is possible by 1) receiving update files from a broadcast station's server through Internet interface 170, and 2) using update files in broadcast information included in signals received from the broadcast-receiving unit 110.

Moreover, a home widget of other broadcast stations may be newly added to the storage unit 180, and widgets of a home widget can be newly added to the storage unit 180.

As explained above, the exemplary embodiments enable users to receive and use widget groups related to information of user-chosen broadcast. Particularly, users can use widgets designated by a broadcast station, which provides a program currently being viewed by users.

The foregoing exemplary embodiments and advantages are merely exemplary and are not to be construed as limiting. The present teaching can be readily applied to other types of apparatuses. Also, the description of the exemplary embodiments is intended to be illustrative, and not to limit the scope of the claims, and many alternatives, modifications, and variations will be apparent to those skilled in the art.

## Claims

1. A widget-providing method comprising:
receiving and outputting a broadcast selected by a user;
acquiring broadcast information of the broadcast selected by the user;
and
displaying one of a plurality of widget groups based on the acquired broadcast information,
wherein each of the widget groups comprises at least one widget.

2. The widget-providing method as claimed in claim 1, wherein the broadcast information is information about a broadcast station, which provides the broadcast selected by the user .

3. The widget-providing method as claimed in claim 2, wherein the widget group displayed in the displaying operation is a congregation of widgets where information provided by the broadcast station is recorded.

4. The widget-providing method as claimed in claim 3, wherein the broadcast information is acquired from broadcast signals, and the information recorded on the widgets is provided from the broadcast station through a network.

5. The widget-providing method as claimed in anyone of claim1 to claim 4, wherein the plurality of widget groups are respectively matched to a plurality of broadcast stations.

6. The widget-providing method as claimed in claim 5, wherein at least one widget in a first widget group among the plurality of widget groups is different from widgets in a second widget group among the plurality of widget groups.

7. The widget-providing method as claimed in claim 5, wherein an arrangement of widgets in the first widget-group among the plurality of widget groups is different from an arrangement of widgets in the second widget-group among the plurality widget groups.

8. The widget-providing method as claimed in anyone of claim1 to claim 7, wherein the broadcast information acquiring operation comprises acquiring broadcast information about a changed broadcast, if the broadcast selected by a user is changed.

9. The widget-providing method as claimed in anyone of claim1 to claim 8, wherein the broadcast information is either information of a program, which is chosen by a user, or information of a channel of the program, which is chosen by a user.

10. A broadcast-receiving apparatus, comprising:
a broadcast-receiving unit which receives a broadcast selected by a user;
a broadcast output unit which outputs the broadcast received at the broadcast receiving unit; and
a control unit which acquires broadcast information of the broadcast which is selected by the user and displays one of a plurality of widget groups on the output unit with the broadcast based on the broadcast information,
wherein each of the plurality of widget groups comprises at least one widget.

11. The broadcast-receiving apparatus as claimed in claim 10, wherein the widget group displayed on the output unit is a congregation of widgets where information provided by the broadcast station is recorded.

12. The broadcast-receiving apparatus as claimed in claim 11, wherein the broadcast information is acquired from broadcast signals, and the information recorded in the widgets is provided by the broadcast station through a network.

13. The broadcast-receiving apparatus as claimed in anyone of claim10 to claim 12, wherein the plurality of widget groups are respectively matched to a plurality of broadcast stations.

14. The broadcast-receiving apparatus as claimed in claim 13, wherein at least one widget in a first widget-group among the plurality of widget groups is different from widgets in a second widget-group among the plurality of widget groups.

15. The broadcast-receiving apparatus as claimed in claim 13, wherein an arrangement of widgets in the first widget-group among the plurality of widget groups is different from an arrangement of widgets in the second widget-group among the plurality of widget groups.
